(19) Europäisches Patentamt
European Patent Office
Office européen des brevets

(11) **EP 2 288 125 A1**

(12) **EUROPEAN PATENT APPLICATION**

(43) Date of publication:
**23.02.2011 Bulletin 2011/08**

(21) Application number: **10158254.2**

(22) Date of filing: **29.03.2010**

(51) Int Cl.:
*H04M 1/725* (2006.01)   *H04M 1/60* (2006.01)
*H04W 48/04* (2009.01)   *H04W 4/04* (2009.01)
*H04M 1/66* (2006.01)

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(30) Priority: **12.08.2009 US 540133**

(71) Applicant: **Drive Safely Corporation Rochester, NY 14605 (US)**

(72) Inventors:
• **Lamb, Craig R.**
  **Penfield, NY 14526 (US)**
• **Mastrella, David M.**
  **Churchville, NY 14428 (US)**

(74) Representative: **Schober, Christoph D. et al Flügel Preissner Kastel Schober Nymphenburger Strasse 20a 80335 München (DE)**

(54) **Cellular device control**

(57)     A method of controlling a cellular device (12) includes determining a velocity of the cellular device (12) and temporarily disabling a short messaging service function of the cellular device (12) in response to the velocity while a voice function of the cellular (12) device remains enabled.

FIG. 1

## Description

FIELD OF THE INVENTION

The present invention relates generally to cellular devices and, more particularly, to systems and methods of controlling cellular devices.

DESCRIPTION OF RELATED ART

The use of cellular devices such as, for example, cellular telephones, has become extremely commonplace in today's society. Due to their ease of use and the broad range of cellular service, cellular devices enable their users to communicate wirelessly almost anywhere across the globe with a push of a button. As a result, cellular devices have become an integral part of everyday life and are relied upon heavily in countless situations and environments.

The emergence of the cellular device as a primary mode of communication, however, has not come without its share of problems. For example, although cellular devices enable individuals to communicate even while operating automobiles and other motor vehicles, the use of cellular devices by drivers may contribute to a high number of automobile accidents and fatalities in recent years due to the driver being distracted. Such distraction may result from, for example, answering incoming phone calls, looking up phone numbers in the memory of the cellular device, or conversing while driving. As a result, many states have passed laws banning the use of cellular devices by drivers unless a hands-free unit, such as a blue tooth earpiece, is used to operate the device's voice function.

Despite these laws, many motorists continue to use cellular devices while driving, and the use of other functions of the cellular device, such as the short messaging system ("SMS") function, while driving is on the rise. Many analysts believe that using the SMS function while driving is even more dangerous than merely talking on the a cellular device since the SMS function requires the user to view the screen of the cellular device and to type messages using the cellular device keypad, thereby further distracting the driver. Since it is difficult if not impossible to halt the usage of cellular devices with laws alone, other methods regulating cellular device usage while driving are needed. For example, although it is lawful to use the voice functions of a cellular device in conjunction with a hands-free component, it may be desirable to disable only certain functions of the cellular device, such as the SMS function, during driving while leaving the voice function of the cellular device enabled.

One or more aspects of the present disclosure are aimed at overcoming the difficulties described above.

BRIEF SUMMARY OF THE INVENTION

In an exemplary embodiment of the present disclosure, a method of controlling a cellular device includes determining a velocity of the cellular device and temporarily disabling a short messaging service function of the cellular device in response to the determined velocity while a voice function of the cellular device remains enabled.

In another exemplary embodiment of the present disclosure, a method of controlling a cellular device includes determining a velocity of the cellular device in response to a user accessing a short messaging service function of the cellular device and comparing the velocity to a predetermined velocity limit. The method also includes disabling the short messaging service function based on a comparison, requesting entry of a full-attention validation by the user in accordance with a validation method preselected by the user, and enabling the short messaging service function in response to entry of the validation. Preferably, the validation comprises one of a predetermined series of keystrokes and a randomly generated series of keystrokes. Furthermore, the validation method preferably comprises requiring entry of a first portion of the validation before displaying a second portion of the validation, and/or comprises requiring entry of the validation within a predetermined period of time. Moreover preferably, the first portion comprises a first randomly generated keystroke and the second portion comprises a second randomly generated keystroke. Preferably, the method further comprises locking the disabled SMS function in response to a locking trigger.

In another exemplary embodiment of the present disclosure, a method of controlling a cellular device includes determining a global positioning system-based velocity of the cellular device, comparing the velocity to a predetermined velocity limit, and enabling a safety feature of the cellular device based on the comparison. The method also includes requesting entry of a full-attention validation and disabling the safety feature in response to entry of the validation. Preferably, the safety feature comprises disabling the SMS function of the cellular device. Moreover, the method preferably further comprises locking the disabled SMS function in response to a locking trigger. Furthermore, the locking trigger preferably comprises one of entry of an incorrect validation and elapsing of a predetermined length of time

In a further exemplary embodiment of the present disclosure, a cellular system includes a cellular device having a transmitter, the cellular device having a short messaging service function and a voice function. The cellular system also includes a controller selected to determine a velocity of the cellular device and to temporarily disable the short messaging service function in response to the velocity while the voice function remains enabled.

In still another exemplary embodiment of the present disclosure, a method of controlling a cellular device having a short messaging service function and a voice function includes identifying a first location of the cellular device in response to a user of the cellular device accessing the short messaging service function, storing information indicative of the first location, and identifying a second location of the cellular device different from the first location. The method also includes comparing the information indicative of the first location to the information indicative of the second location and temporarily disabling the short messaging service function of the cellular device based on the comparison while a voice function of the cellular device remains enabled.

BRIEF DESCRIPTION OF THE SEVERAL VIEWS OF THE DRAWING(S)

Fig. 1 is a schematic view of a cellular system according to an exemplary embodiment of the present disclosure.

Fig. 2 is a flow chart illustrating a method of controlling a cellular device according to an exemplary embodiment of the present disclosure.

Fig. 3 is a flow chart illustrating a method of controlling a cellular device according to another exemplary embodiment of the present disclosure.

Fig. 4 is a flow chart illustrating a method of controlling a cellular device according to a further exemplary embodiment of the present disclosure.

DETAILED DESCRIPTION OF THE INVENTION

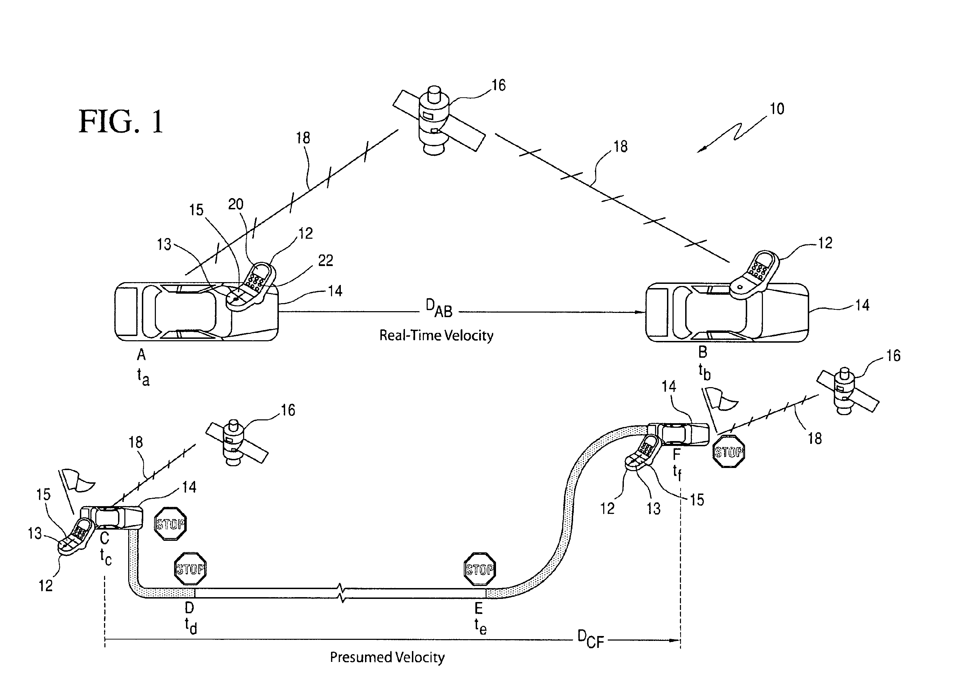

As shown in Fig. 1, in an exemplary embodiment of the present disclosure, a cellular system 10 may include a cellular device 12 and a global positioning satellite 16. The cellular device 12 may be any electronic device known in the art capable and/or otherwise configured to utilize cellular technology. Such devices 12 may include, but are not limited to, for example, cellular telephones, and personal digital assistants ("PDAs") such as commonly available brands including IPhones, Blackberrys, Palm Pilots, and/or other known devices. The cellular device 12 may have a variety of functions that are enabled through wireless or cellular technology. Such functions may include, for example, a voice function in which the voice of the user, or other sounds, are wirelessly transmitted from the cellular device 12 to one or more other remote devices such as landline-based telephones or additional cellular devices. The cellular device 12 may also include an SMS function such as, for example, a texting function, in which the user may send and receive typed messages via the cellular device 12. Other functions of the cellular device 12 may include, but are not limited to, data transmission, and internet access.

The cellular device 12 may include any of a plurality of components commonly known in the art. Such components may be hardware, software, and/or firmware of the cellular device 12. For example, as shown schematically in Fig. 1, the cellular device 12 may include a transmitter 13 and a controller 15. The cellular device 12 may also include, among other things, a display 20, a keypad 22, and/or other components commonly known in the art.

The transmitter 13 may be, for example, any known cellular, wireless, radio, and/or other electronic transmitter known in the art. The transmitter 13 may be configured to enable the cellular device 12 to send and/or receive signals to and/or from remote devices such as, for example, additional cellular devices, cellular transmission towers, and/or the GPS satellite 16. In an exemplary embodiment, the transmitter 13 may comprise a transceiver to both send and receive signals. The transmitter 13 may be configured, for example, to send signals to and from the GPS satellite 16, and the signals may contain information regarding, for example, the location of the cellular device 12. In such an exemplary embodiment, the transmitter 13 may comprise a GPS signal transmitter 13. The transmitter 13 may also be configured to transmit wireless signals containing voice, SMS, data, and/or other information to a remote receiver/sender. Although not show in Fig. 1, it is understood that one or more cellular towers, cellular satellites, and/or other cellular technology components may be utilized to transmit such signals to and from the cellular device 12.

The controller 15 of the cellular device 12 may be any microprocessor, computer, and/or other control device configured to assist in manipulating and/or otherwise controlling the various functions of the cellular device 12. For example, the controller 15 may assist in regulating and/or controlling the SMS function, voice function, and/or other functions of the cellular device 12. In an exemplary embodiment, the controller 15 may be selected to determine a velocity of the cellular device 12 based on position/distance and time information, and to temporarily disable one or more functions of the cellular device 12, such as the SMS function, in response to the determined velocity. In such an exemplary embodiment, the controller 15 may be configured to temporarily disable the function while one or more of the other functions of the cellular device 12, such as, for example, the voice function, remains enabled. It is understood that the transmitter 13 and/or the controller 15 may be hardware contained within the cellular device 12. Alternatively, the controller 15 and/or the transmitter 13 may be firmware of the cellular device 12. The controller 15 may be electrically and/or otherwise controllably connected to the transmitter 13. For example, the transmitter 13 may be configured and/or otherwise selected to receive information indicative of a location of the cellular device 12 and, in such an exemplary embodiment, the controller 15 may be selected and/or otherwise configured to determine the velocity of the cellular device 12 based on information received by the transmitter 13.

The satellite 16 may be any global positioning system satellite, cellular device satellite, or other remote satellite known in the art. For example, as shown in Fig. 1, the satellite 16 may be electrically and/or wirelessly connected to the cellular device 12 via a wireless connection 18. The satellite 16 may be configured to send and/or receive signals via the connection 18 containing information indicative of, for example, one or more positions of the cellular device 12. Though not shown in Fig. 1, it is understood that such signals may be sent and/or received via one or more cellular and/or GPS towers. In any exemplary embodiment, the satellite 16 may be in orbit around the earth and, and in a further exemplary embodiment, the orbit may be geosynchronous. As such satellites 16 are well known in the art, the satellite 16 will not be described in greater detail herein.

The cellular device 12 may be used wherever cellular service is available, and often times cellular devices 12 are used in stationary as well as moving environments. For example, the cellular device 12 may be used by a passenger and/or a driver of a moving vehicle 14 as the vehicle 14 is stationary or traveling from a first location to a second location. Although shown in Fig. 1 as being an automobile, it is understood that the vehicle 14 may be, for example, a train, airplane, bus, railcar, bicycle, or other moving vehicle configured to transport its passengers between two or more desired locations.

As will be described in greater detail below, the cellular system 10 may be used to, for example, determine a velocity of the cellular device 12 and to temporary disable to one or more functions of the cellular device 12 in response to the determined velocity. Alternatively, the cellular system 10 may be utilized to determine the position of the cellular device 12 and to temporarily disable one or more functions of the cellular device 12 based on the position of the cellular device 12. In disabling such functions, the cellular system 10 may take into account, for example, a first position A of the cellular device 12, a second position B of the cellular device 12, and the distance $D_{AB}$ between the two positions. The cellular system 10 may also take into account the time elapsed ($t_B$-$t_A$) as the cellular device 12 travels from the first position A to the second position B. Accordingly, the cellular system 10 may determine the real-time velocity of the cellular device 12 based on the known equation:

$$\text{Distance} = \text{Velocity X Time}$$

It is also understood, however, that the vehicle 14 may make one or more stops in travelling from a first position to a second position. Accordingly, the cellular system 10 may be configured to perform one or more secondary calculations to determine a velocity of the cellular device 12 based on the overall distance covered over time even if the vehicle 14 is at rest somewhere during the journey. For example, a user accessing the SMS function of the cellular device 12 may initiate a velocity determination sequence. In such an exemplary embodiment, a secondary velocity calculation may determine a presumed velocity based on the total distance traveled by the vehicle 14 even if the cellular device 12 was at rest (i.e. position C, D, E) at the time of a first SMS request. For example, if the vehicle 14 traveled a distance $D_{CF}$ equal to 4 miles in 6 minutes, the cellular system 10 may then determine that the cellular device 12 averaged a presumed velocity of 40 mph even though the vehicle 14 and the cellular device 12 may have stopped (having a real-time velocity of zero) at position D and/or E.

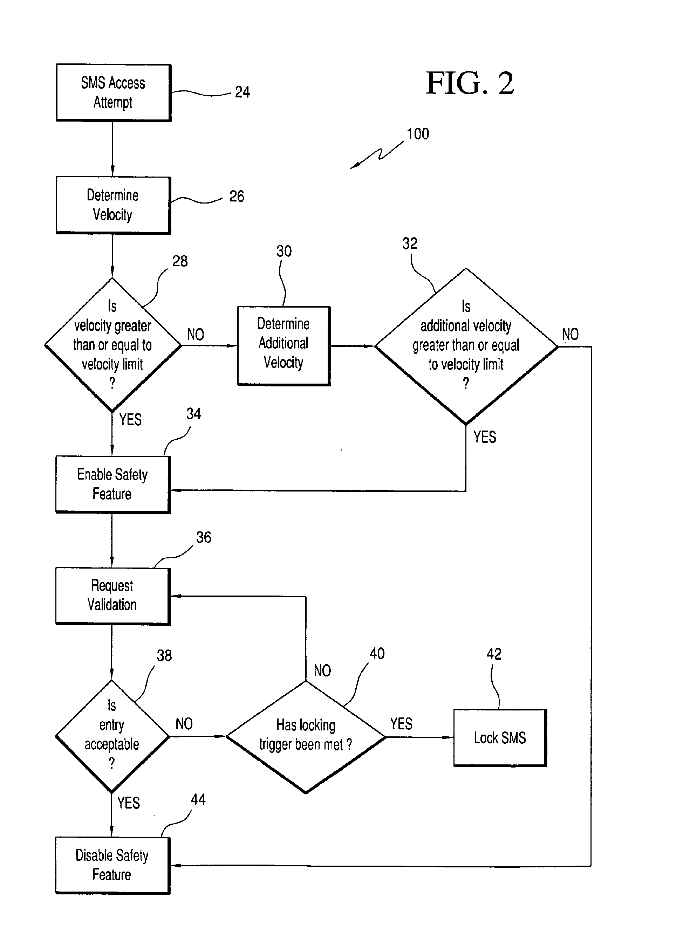

As shown in Fig. 2, a method 100 of controlling a cellular device 12 may include, for example, determining the velocity of the cellular device and temporarily disabling a function, for example, the SMS function, of the cellular device 12 in response to the determined velocity while an additional function, such as, for example, a voice function of the cellular device 12 remains enabled. Such a control method may be initiated by a user accessing and/or such otherwise requesting usage of the desired function. For ease of explanation, the SMS function of the cellular device 12 will be used for the duration for this application for discussion purposes, but it is understood that any of the other functions of the cellular device 12 may be used to initiate the control methods discussed herein. It is also understood that any desired action by the user may trigger the disclosed method of control. For example, the method 100 may be initiated by the user accessing the SMS function of the cellular device 12 via one or more menus, by the user beginning to enter an SMS message via the cellular device 12, or by the user attempting to send the SMS message.

Once the user has attempted to access the SMS function (Step 24), the controller 15 and/or other components of the cellular system 10 may determine a velocity of the cellular device 12 (Step 26). As discussed above, the determined velocity may correspond to a distance $D_{AB}$ between two spaced locations (Position A and Position B) of the cellular device 12 and an elapsed time ($t_B$-$t_A$) there between. In an exemplary embodiment, the determined velocity may also correspond to a distance $D_{AB}$ between two spaced locations A, B of SMS function access attempts and an elapsed time ($t_B$-$t_A$) there between. In an additional exemplary embodiment, the velocity of the cellular device 12 may be determined contemporaneous with a user attempting to access, for example, the SMS function.

As shown in Fig. 2, the controller 15 and/or other components of the cellular system 10 may determine whether the velocity determined in Step 26 is greater than or equal to a predetermined velocity limit (Step 28). The velocity limit may be any desired speed and may approximate a maximum human walking speed. Such an exemplary velocity may be approximately 3 miles per hour. If the velocity determined at Step 26 is not greater or equal to the velocity limit, the cellular system 10 may assume that the cellular device 12 is being used in a safe way and is not being transported in, for example, a vehicle 14.

However, to ensure that, for example, a driver of the vehicle 14 is not merely accessing the SMS function of the cellular device 12 while the vehicle 14 is stopped in an effort to avoid the automatic disabling of the SMS function, the cellular system 10 may determine an additional velocity of the cellular device 12 (Step 30). The cellular system 10 may then determine whether the additional velocity is greater than or equal to the predetermined velocity limit (Step 32). If the additional velocity determined in Step 30 is greater than or equal to the predetermined velocity limit, the cellular system 10 may conclude that the cellular device 12 is being used in a vehicle 14 and, thus, a safety feature of the cellular device 12 may be enabled (Step 34). As discussed above, the safety feature may include temporarily disabling the SMS function of the cellular device 12. However, because it may be important for the user to maintain access to other functions of the cellular device 12, such as, for example, the voice function, the safety feature may disable the SMS function of the cellular device 12 while the voice function or other functions of the cellular device 12 remain enabled. Alternatively, if the additional velocity determined at step 30 is not greater than or equal to the predetermined velocity limit, the safety feature may be disabled (Step 44) and the user may be free to use the SMS function.

If, on the other had, the initial velocity determined at Step 26 is greater than or equal to the predetermined velocity limit, the safety feature may be enabled (Step 34) as described above. Once the safety feature of the present disclosure is enabled, the controller 15 and/or other components of the cellular system 10 may request validation from the user (Step 36) to confirm that the user is not actually, for example, driving the vehicle while attempting to send an SMS message. For example, the controller 15 may require entry of a full-attention validation before enabling the SMS function of the cellular device 12. In an exemplary embodiment, such a validation may include a predetermined series of keystrokes that the user must enter on the keypad 22 of the cellular device 12, or any other full-attention validation known in the art.

The user of the cellular device 12 may be required to preselect a validation method prior to use of the cellular device 12. Alternatively, the cellular service carrier or the cellular device manufacturer may preselect a validation method. Selecting the validation method may include requiring the entry of the full-attention validation. Selecting the validation method may also include selecting the predetermined validation to be entered by the user. Alternatively, the required validation may be a randomly generated series of keystrokes, generated by, for example, the controller 15 of the cellular device 12 in response to the user attempting to access the SMS function. The chosen validation method may also include requiring entry of the validation within a predetermined period of time such as, for example, several seconds. In still another exemplary embodiment, the chosen validation method may include requiring entry of a first portion of the validation prior to displaying a second portion of the validation on, for example, the display 20 of the cellular device 12. In such an exemplary embodiment, at least one of the first portion and the second portion of the validation may comprise at least one randomly generated keystroke. In a further exemplary embodiment, the first portion and the second portion of the validation may both comprise multiple randomly generated keystrokes.

After requesting entry of the full-attention validation (Step 36), the cellular system 10 may determine whether the user's entry is acceptable (Step 38). For example, the controller 15 of the cellular device 12 may determine whether the validation was entered within the predetermined period of time and/or whether the entire validation was typed in correctly by the user. If the entry was entered properly, and the cellular system 10 determines the entry to be acceptable, the safety feature may be disabled (Step 44) and the SMS function of the cellular device 12 may be used as desired.

If, however, the entry is not acceptable, the cellular system 10 may determine whether a locking trigger has been met (Step 40). The locking trigger may include any electronic trigger known in the art, such as, for example, entry of an incorrect validation and/or elapsing of a predetermined length of time. If this trigger has been met, the disabled SMS function may be locked from use for a period of time (Step 42). If, however, such a locking trigger has not been met, the controller 15 may simply request entry of a full-attention validation from the user once again (Step 36). It is understood that in any of the exemplary embodiments discussed herein, disabling the safety feature (Step 44) may also include enabling, for example, the SMS function of the cellular device 12 for a predetermined period of time in response to entry of an acceptable full-attention validation. Alternatively, once an acceptable validation has been entered, the safety feature may be disabled until the SMS function is no longer in use.

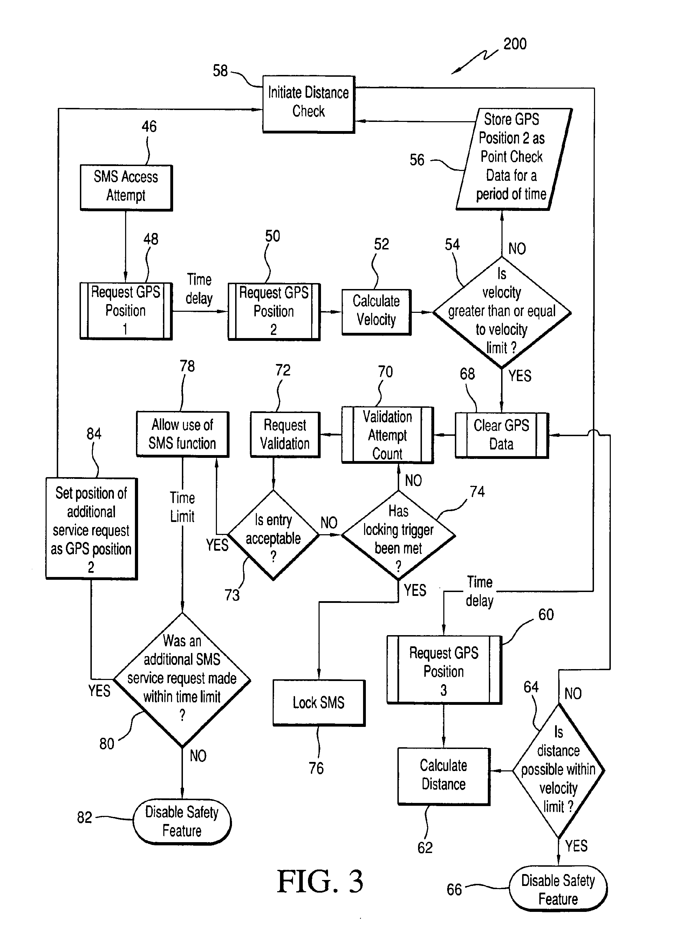

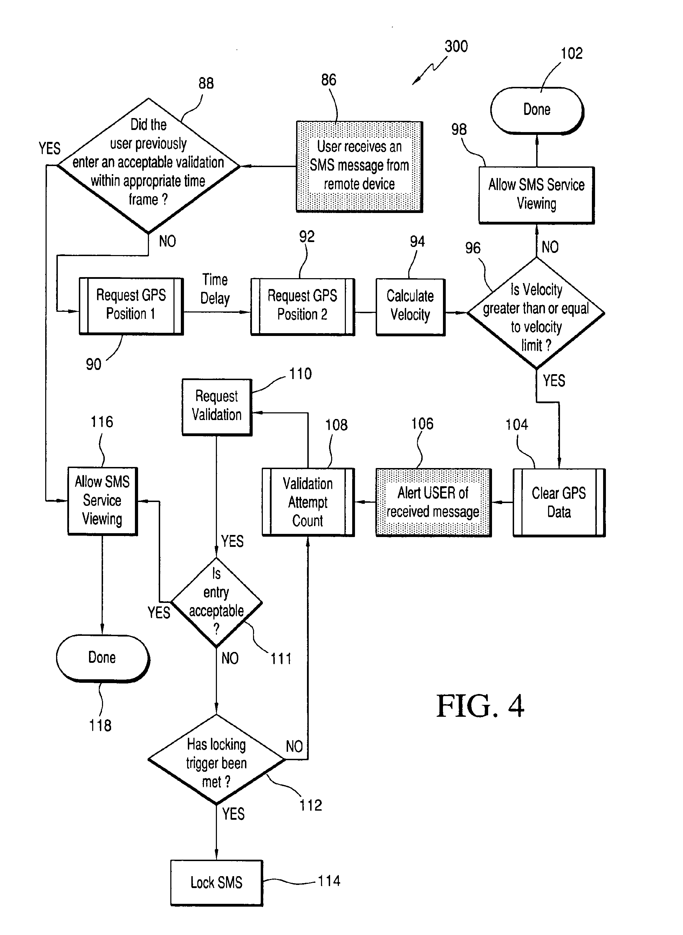

Figs. 3 and 4 further illustrate the exemplary method 100 discussed above with respect to Fig. 2. Fig. 3 illustrates an exemplary method 200 of controlling a cellular device 12 in which the user attempts to access the SMS function and/or otherwise initiates or enables the SMS function of the cellular device 12. Fig. 4, on the other hand, illustrates a method 300 of controlling a cellular device in which the user receives an SMS text or message from a remote device.

As shown in the method 200 of Fig. 3, when the user attempts to access the SMS function (Step 46), the controller 15 or other components of the cellular device 12 may determine the real-time velocity of the cellular device 12 by requesting a first GPS position (Step 48). In such a request, the cellular device 12 may contact the GPS satellite via the connection 18, and through such communication, this first position of the cellular device 12 may be determined. As such position determinations are well known in the art, this process will not be described in great detail herein. Upon delaying a predetermined length of time, the cellular device 12 may request and/or otherwise determine a second GPS-based position (Step 50). Using the first and second determined positions, as well as the known time delay between obtaining the two positions, the controller 15 of the cellular device 12 may calculate the real-time velocity of the cellular device 12 (Step 52). In an exemplary embodiment, the time delay between obtaining the two positions may be related to and/or otherwise depend upon the velocity at which the cellular device 12 is moving. In such an exemplary embodiment, if the cellular device 12 is moving at a relatively high velocity, the time delay may be less than if the cellular device 12 is moving at a relatively low velocity. For example, a one second time delay between determining positions may be used if the cellular device 12 is traveling faster than 1 m/sec, while a three second time delay between determining positions may be used if the cellular device 12 is traveling slower than 1 m/sec. In an additional exemplary embodiment, the time delay may be approximately two seconds, and in a further exemplary embodiment, the time delay may be approximately three seconds. It is understood, however, that the components disclosed herein may be configured to determine GPS-based positions using any desired time delay or interval, and the methods discussed herein are not limited to the time delay examples set forth above. It is also understood that if the GPS-based positions are being determined for the first time (Steps 48 and 50), the real-time velocity of the cellular device 12 may not yet be known and the initial time delay employed by the disclosed methods may be any useful preselected time delay. For example, such an initial preselected time delay may be approximately five seconds or less.

As discussed above with respect to Step 28 of Fig. 2, once the real-time velocity has been calculated at Step 52, the cellular device 12 may evaluate whether the determined velocity is greater than or equal to a predetermined velocity limit (Step 54). If the velocity is not greater than or equal to the velocity limit, the controller 15 of the cellular device 12 may store coordinates of the second position determined at Step 50 for a predetermined period of time (Step 56), and may initiate a supplemental distance check (Step 58). This supplemental distance check may enable the cellular device 12 to determine whether the cellular device 12 is traveling at a rate of speed that would only be possible if the cellular device 12 was moving in a vehicle 14, but was actually in a stopped position (or traveling at a rate of speed below the velocity limit) when the velocity was calculated at Step 52.

Once the supplemental distance check is initiated at Step 58, the cellular device 12 may request a third GPS position (Step 60) after a predetermined time delay. The cellular device 12 may then calculate the distance traveled during the time delay, thus the distance traveled between the stored second position (Step 56) and the third position determined at Step 60 (Step 62). As part of this supplemental distance check, the controller 15 of the cellular device 12 may determine whether the calculated distance traveled by the cellular device 12 is possible within the acceptable velocity limit referenced at Step 54 (Step 64). If, for example, the distance traveled is relatively minimal such that the cellular device 12 may be being used by a user who is travelling on foot, or not at all, the controller 15 of the cellular device 12 may disable the safety feature (Step 66), thereby allowing the user to continue using the SMS function. If, however, the calculated distance is greater than or equal to a predetermined distance limit, and is thus not possible unless the cellular device 12 is being transported in, for example, a vehicle 14, the controller 15 of the cellular device 12 may clear, for example, the GPS data obtained at Steps 60, 50, and/or 48 (Step 68). The controller 15 and/or other components of the cellular device 12 may then initiate a validation attempt count (Step 70) or other metric useful for keeping track of the number of times a user of the cellular device 12 attempts to enter a validation. The controller 15 of the cellular device 12 may then request entry of a validation from the user (Step 72).

As discussed above with regard to Step 36 of Fig. 2, the requested validation can be any type of validation known in the art and may be, for example, a full-attention validation comprising a plurality of randomly generated keystrokes. In an exemplary embodiment, the user may be required to enter the validation in an acceptable time limit and/or in fewer than a predetermined number of attempts in order to disable the safety feature and thereby allow use of the SMS function as shown in Step 78. However, as shown in Step 73, if the user's entry is not acceptable, the cellular device 12 may determine whether a locking trigger has been met (Step 74). As discussed above with respect to Step 40 of Fig. 2, this locking trigger may be, for example, one of entry of an incorrect validation and elapsing of a predetermined length of time. If the locking trigger has not been met (i.e., the validation was entered within the predetermined length of time or the user has not entered more than an unacceptable number of incorrect validations) the controller 15 of the cellular device 12 may increase the validation attempts count by 1 at Step 70, and may again request entry of an acceptable validation from the user (Step 72). If, however, the predetermined locking trigger has been met, the controller 15 of the cellular device 12 may lock the SMS function (Step 76) thereby prohibiting its use for a predetermined length of time.

As discussed above with regard to Steps 58-64, the disclosed method 200 may include a supplemental distance check in situations where a calculated real-time velocity of the cellular device 12 is less than a predetermined velocity limit. This supplemental distance check may be performed regardless of whether or not the user of the cellular device 12 made an additional attempt to activate the SMS function and/or otherwise made an additional SMS service request during the time delay between travelling from position 2 (Step 50) to position 3 (Step 60). Accordingly, the method 200 may include an additional safety check after use of the SMS function is allowed at Step 78. If a user previously obtains access to the SMS function, this additional safety check may safeguard against that user maintaining access to the SMS function while later driving.

As shown in Fig. 3, in such an additional safety check, the controller 15 of the cellular device 12 may allow use of the SMS function for a predetermined time limit and may then determine whether an additional SMS service request was made by the user (i.e., whether the user attempted to send an additional SMS message) within the time limit (Step 80). If no additional SMS service request was made by the user during the time limit, the controller 15 of the cellular device 12 may disable the safety feature (Step 82) and allow the user to freely use the SMS function. If, however, the user did make an additional SMS service request during the time limit, the controller 15 of the cellular device 12 may determine the GPS position of the cellular device 12 at the time this additional SMS service request was made, and may set this GPS position as new GPS position 2 (Step 84). The controller 15 may then initiate the supplemental distance check described above with respect to Step 58.

As shown in Fig. 4, the method 300 of controlling the cellular device 12 may govern use of the SMS function in situations in which the user of the cellular device 12 does not initiate, activate, and/or otherwise enable the SMS function. For example, the user of the cellular device 12 may receive a text or SMS message that was unsolicited from a remote device (Step 86). As a result, the controller 15 of the cellular device 12 may not be able to accurately determine a presumed velocity of the cellular device 12 according to the distance traveled by the cellular device 12 over time. Instead, the controller 15 of the cellular device 12 may only be capable of initially determining a real-time speed when the user is attempting to view the received message. The safety feature of the cellular device 12 may, thus, require the user to enter a validation in order to view each received message. This process may continue until the user actually sends an SMS message from the cellular device 12. As will be explained below, upon sending such a message, the controller 15 of the cellular device 12 may request and/or otherwise determine a first GPS position as discussed above with regard to Step 48 of Fig. 3. The controller 15 may then proceed with the process described above with regard to Fig. 3.

With continued reference to Fig. 4, the method 300 may be useful in situations where the user attempts to read an unsolicited incoming SMS message at an acceptable speed. However, if the user chooses to respond to the message while the cellular device 12 is traveling at a velocity greater than or equal to the predetermined velocity limit, the method 200 may govern control of the cellular device 12.

Once the user receives an SMS message from the remote device, the controller 15 of the cellular device 12 may determine whether the user previously entered an acceptable validation within an appropriate timeframe. It is understood that such an appropriate timeframe may be selected to ensure that the user is not merely attempting to bypass the safety feature. If the user did previously enter an acceptable validation, the controller 15 of the cellular device 12 may allow the user to view the SMS message (Step 116), and may discontinue monitoring such viewing until the user attempts to send an SMS message (Step 118).

If, on the other hand, the user has not previously entered an acceptable validation, the controller 15 of the cellular device 12 may request a first GPS position (Step 90), and after a predetermined time delay, may request a second GPS position (Step 92). The controller 15 may then calculate the velocity of the cellular device 12 (Step 94) based on the length of the time delay and the first and second positions, and may determine whether the calculated velocity is greater than or equal to a predetermined velocity limit (Step 96). It is understood that Steps 90-96 of Fig. 4 are substantially the same as Steps 48-54 discussed above with respect to Fig. 3. Once this real-time velocity check is completed, if the controller 15 determines that the calculated velocity is not greater than or equal to the velocity limit, the controller 15 may allow the user to view the received message (Step 98) and may discontinue regulating the SMS function until the user attempts to send an SMS message (Step 102).

If, however, the calculated velocity is greater than or equal to the predetermined velocity limit, the controller 15 may clear the collected GPS position data (Step 104), alert the user of the received message (Step 106), and initiate a validation count (Step 108). As discussed above with regard to Steps 72, 73, 74, and 76 of Fig. 3, the controller 15 of the cellular device 12 may request a validation from the user (Step 110) and may determine if the entered validation is acceptable (Step 111). If the entry is not acceptable, the controller 15 may determine whether a predetermined locking trigger has been met (Step 112) and, if so, the controller 15 may lock the SMS function for a predetermined period of time (Step 114). During such a time period, the user may not be permitted to view and/or otherwise access the SMS function. As shown in Fig. 4, if, on the other hand, the entered validation is acceptable, the controller 15 of the cellular device 12 may allow for SMS service viewing as described above with regard to Step 116.

It is understood that each of the embodiments discussed above may assist in limiting and/or otherwise prohibiting use of one or more functions of the cellular device 12 if the cellular device 12 is traveling at speeds in excess of those typically associated with human walking. While functions, such as, for example, the SMS function of the cellular device 12 may be deactivated and/or otherwise disabled by the methods described above, the other functions of the cellular device 12 such as, for example, the voice function of the cellular device 12 may remain enabled despite the velocity of the cellular device 12. As a result, the methods described herein may enable users of the cellular device 12 to communicate orally via the cellular device, for example, while driving, using a blue tooth device, hands-free device, and/or other known technologies, even though the user may be prohibited from sending SMS messages based on the velocity of the cellular device 12. Such methods may be a desirable alternative to prior art methods in which the voice function and/or all other functions of the cellular device 12 are disabled once conditions for disabling the SMS function of the cellular device 12 have been met.

While the invention has been described in conjunction with specific embodiments thereof, it is evident that many alternatives, modifications, and variations will be apparent to those skilled in the art in light of the foregoing description. Accordingly, the present invention is intended to embrace all such alternatives, modifications, and variations as fall within the spirit and broad scope of the appended claims.

**List of reference signs**

| | |
|---|---|
| 10 | cellular system |
| 12 | cellular device |
| 13 | transmitter |
| 14 | vehicle |
| 15 | controller |
| 16 | global positioning satellite |
| 18 | wireless connection |
| 20 | display |
| 21 | keypad |
| 24 - 98 | step |
| 102 - 118 | step |
| 100 | method of controlling a cellular device |
| 200 | method of controlling a cellular device |
| 300 | method of controlling a cellular device |

**Claims**

1. A method of controlling a cellular device (12), comprising:

   (a) determining a velocity of the cellular device (12); and
   (b) temporarily disabling a short messaging service (SMS) function of the cellular device (12) in response to the velocity while a voice function of the cellular device (12) remains enabled.

2. The method according to claim 1, **characterized by** further comprising requiring entry of a full-attention validation before enabling the disabled SMS function, in particular within a predetermined period of time.

3. The method according to claim 2, **characterized in that** the validation comprises a predetermined series of keystrokes, and/or a randomly generated series of keystrokes.

4. The method according to claim 2 or 3, **characterized by** further comprising requiring entry of a first portion of the validation before displaying a second portion of the validation, wherein preferably the first portion comprises a first randomly generated keystroke and the second portion comprises a second randomly generated keystroke.

5. The method according to any one of the claims 2 to 4, **characterized by** further comprising locking the disabled SMS function in response to a locking trigger, in particular one of entry of an incorrect validation and elapsing of a predetermined length of time.

6. The method according to any one of the claims 2 to 5, **characterized by** further including enabling the SMS function for a predetermined period of time in response to entry of the validation.

7. The method according to any one of the claims 2 to 6, **characterized by** further including requiring preselection of a validation method by a user of the cellular device (12), the validation method comprising entry of the full-attention validation.

8. The method according to any one of the claims 1 to 7, **characterized in that** the velocity is determined in response to a user of the cellular device (12) attempting to access the SMS function.

9. The method according to any one of the claims 1 to 8, **characterized in that** firmware of the cellular device (12) temporarily disables the SMS function.

10. The method according to any one of the claims 1 to 9, **characterized in that** determining the velocity comprises determining a first velocity of the cellular device (12) and comparing the first velocity to a predetermined velocity limit, and in particular determining a second velocity of the cellular device (12) if the first velocity is below the predetermined velocity limit.

11. The method according to any one of the claims 1 to 10, **characterized in that** determining the velocity comprises determining a velocity of the cellular device (12) contemporaneous with a user attempting to access the SMS function.

12. The method according to any one of the claims 1 to 11, **characterized in that** the determined velocity corresponds to a distance between two spaced locations of SMS function access attempts and an elapsed time therebetween.

**13.** The method according to any one of the claims 1 to 12, **characterized in that** determining the velocity of the cellular device (12) is executed in response to a user accessing a short messaging service (SMS) function of the cellular device (12), and that disabling the SMS function is based on a comparison of the velocity to a predetermined velocity limit, further comprising:

(a) requesting entry of a full-attention validation by the user in accordance with a validation method preselected by the user; and
(b) enabling the SMS function in response to entry of the validation.

**14.** The method according to any one of the claims 1 to 12, **characterized in that** determining the velocity of the device is achieved by means of a global positioning system (GPS) and that disabling the SMS function is based on a comparison of the velocity to a predetermined velocity limit, further comprising:

(a) requesting entry of a full-attention validation; and
(b) disabling the safety feature in response to entry of the validation.

**15.** The method according to claim 14, **characterized in that** the safety feature is disabled for a predetermined period of time.

**16.** The method according to claim 14 or 15, **characterized in that** a voice function of the cellular device (12) remains enabled while the safety feature is enabled.

**17.** The method according to any one of the claims 1 to 12, **characterized in that** determining the velocity of the cellular device is achieved by identifying a first location of the cellular device (12) in response to a user of the cellular device (12) accessing the SMS function, storing the information indicative of the first location, identifying a second location of the cellular device (12) different from the first location and comparing the information indicative of the first location to the information indicative of the second location.

**18.** The method according to claim 17, **characterized in that** the second location of the cellular device (12) is identified in response to the user accessing the SMS function, and/or in response to elapsing of a predetermined period of time.

**19.** The method according claim 17 or 18, **characterized by** further comprising:

(a) determining a first time at which the cellular device (12) is in the first location and

(b) determining a second time at which the cellular device (12) is in the second location, wherein comparing the information comprises comparing the first time to the second time.

**20.** A cellular system, comprising:

(a) a cellular device (12) comprising a transmitter (13), the cellular device (12) having a short messaging service (SMS) function and a voice function; and
(b) a controller (15) selected to determine a velocity of the cellular device (12) and to temporarily disable the SMS function in response to the velocity while the voice function remains enabled.

**21.** The system according to claim 20, **characterized in that** the transmitter (13) comprises a GPS signal transmitter, which is preferably selected to receive information indicative of a location of the cellular device (12).

**22.** The system according to claim 21, **characterized in that** the controller (15) determines the velocity of the cellular device (12) based on the information received.

**23.** The system according to any one of the claims 20 to 22, **characterized in that** one of hardware and software, in particular the firmware of the cellular device (12) comprises the controller (15).

# FIG. 1

# FIG. 2

58 — Initiate Distance Check

200

46 — SMS Access Attempt

56 — Store GPS Position 2 as Point Check Data for a period of time

48 — Request GPS Position 1

Time delay

50 — Request GPS Position 2

52 — Calculate Velocity

54 — Is velocity greater than or equal to velocity limit ?

NO

YES

78 — Allow use of SMS function

72 — Request Validation

70 — Validation Attempt Count

68 — Clear GPS Data

84 — Set position of additional service request as GPS position 2

Time Limit

73 — Is entry acceptable ?

YES

NO

Has locking trigger been met ?

74

NO

YES

Time delay

80 — Was an additional SMS service request made within time limit ?

YES

NO

Lock SMS

76

60 — Request GPS Position 3

64 — Is distance possible within velocity limit ?

NO

YES

82 — Disable Safety Feature

Calculate Distance

62

66 — Disable Safety Feature

**FIG. 3**

FIG. 4

| | Europäisches Patentamt European Patent Office Office européen des brevets | **EUROPEAN SEARCH REPORT** | Application Number EP 10 15 8254 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/072553 A1 (BARBERA MELVIN A [US]) 29 March 2007 (2007-03-29) * paragraph [0002] * * paragraph [0008] - paragraph [0016] * * paragraph [0018] - paragraph [0030] * * paragraph [0032] * * paragraph [0037] - paragraph [0038] * * paragraph [0045] * * paragraph [0048] * * paragraph [0051] * * paragraph [0063] - paragraph [0066] * * figures 1,2 * ----- | 1-23 | INV. H04M1/725 H04M1/60 H04W48/04 H04W4/04 H04M1/66 |
| A | WO 2009/012522 A1 (RETHINK TECHNOLOGY PTY LTD [AU]; BARNARD BRETT RUSSELL [AU]; REYNOLDS) 29 January 2009 (2009-01-29) * the whole document * ----- | 1-23 | |
| E | WO 2010/062754 A1 (SPRINT SPECTRUM LP [US]; SCHLESENER MATTHEW C [US]; MAUER BRIAN D [US]) 3 June 2010 (2010-06-03) * the whole document * ----- | 1,20 | TECHNICAL FIELDS SEARCHED (IPC) H04M H04W G01P B60R |

The present search report has been drawn up for all claims

| Place of search | Date of completion of the search | Examiner |
|---|---|---|
| Munich | 26 November 2010 | Banerjea, Robin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 15 8254

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2010

| Patent document cited in search report | | Publication date | Patent family member(s) | | Publication date |
|---|---|---|---|---|---|
| US 2007072553 | A1 | 29-03-2007 | EP<br>US<br>WO | 1929801 A2<br>2009163243 A1<br>2007040777 A2 | 11-06-2008<br>25-06-2009<br>12-04-2007 |
| WO 2009012522 | A1 | 29-01-2009 | AU | 2008280823 A1 | 29-01-2009 |
| WO 2010062754 | A1 | 03-06-2010 | US | 2010113073 A1 | 06-05-2010 |

EPO FORM P0459

For more details about this annex : see Official Journal of the European Patent Office, No. 12/82